# Europäisches Patentamt
# European Patent Office
# Office européen des brevets

(19)

(11) Veröffentlichungsnummer: **0 125 232**
**B1**

(12)

# EUROPÄISCHE PATENTSCHRIFT

(45) Veröffentlichungstag der Patentschrift:
26.11.86

(21) Anmeldenummer: 84890061.9

(22) Anmeldetag: 30.03.84

(51) Int. Cl.⁴: **E 21 C 35/18**, E 21 C 35/22

(54) Verfahren zum Schrämen von Gestein sowie Vorrichtung zur Durchführung dieses Verfahrens.

(30) Priorität: 11.04.83 AT 1281/83

(43) Veröffentlichungstag der Anmeldung:
14.11.84 Patentblatt 84/46

(45) Bekanntmachung des Hinweises auf die Patenterteilung:
26.11.86 Patentblatt 86/48

(84) Benannte Vertragsstaaten:
AT BE DE FR GB SE

(56) Entgegenhaltungen:
EP-A-0 060 827
AT-B-337 763
DE-A-2 810 982
GB-A-2 077 813
US-A-3 695 721
US-A-3 860 292

(73) Patentinhaber: **VOEST- ALPINE Aktiengesellschaft, Friedrichstrasse 4, A-1011 Wien (AT)**

(72) Erfinder: **Wrulich, Herwig, Haldenweg 4, A-8740 Zeltweg (AT)**
Erfinder: **Schetina, Otto, Dipl.- Ing., Bessemerstrasse 36, A-8740 Zeltweg (AT)**
Erfinder: **Siebenhofer, Gottfried, Grazerstrasse 16, A-8753 Fohnsdorf (AT)**
Erfinder: **Maier, Wilfried, Pfaffendorfersiedlung 94, A-8740 Zeltweg (AT)**

(74) Vertreter: **Haffner, Thomas M., Dr., Patentanwaltskanzlei Dipl.- Ing. Adolf Kretschmer Dr. Thomas M. Haffner Schottengasse 3a, A-1014 Wien (AT)**

EP 0 125 232 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Die Erfindung bezieht sich auf ein Verfahren zum Schrämen von Gestein mit einem Schrämkopf, dessen Meißel über einen begrenzten Hub axial verschiebbar mit einem als druckmittelbeaufschlagtes Ventil ausgebildeten Zylinder-Kolbenaggregat zusammenwirken, sowie eine Vorrichtung zur Durchführung dieses Verfahrens mit einer Teilschnittschrämmaschine, deren Schrämarm wenigstens einen Schrämkopf aufweist, welcher mit in ihrer Achsrichtung über einen begrenzten Hub axial verschieblich in Meißelhaltern gelagerten Meißeln bestückt ist. Zur Verbesserung der Schneidleistung und Verringerung der aufzuwendenden Energie ist es bereits bekannt, die Meißel beispielsweise durch Ultraschall in Schwingungen zu versetzen. Derartige Konstruktionen sind jedoch relativ aufwendig und auf Grund der hohen mechanischen Beanspruchung der Schwingungsgeber relativ störanfällig. Es ist bereits bekannt (EP-A-60827), Meißel über einen begrenzten Hub axial verschiebbar in einem Meißelhalter anzuordnen, wobei in diesem Falle der Verschiebeweg des Meißels, sobald der Meißel in das abzubauende Gestein eintaucht, dazu ausgenützt wurde, um das Steuern der Wasserzufuhr mittels eines als Ventil ausgebildeten Zylinder-Kolbenaggregats zu gegen die Meißel oder die Ortsbrust gerichteten Wasserdüsen zu ermöglichen. Es sollte bei diesen bekannten Ausbildungen ein Spritzen von Wasser nur dann ermöglicht werden, wenn der Meißel tatsächlich im Eingriff mit dem abzubauenden Gestein steht.

Die Erfindung zielt nun darauf ab, ein Verfahren zum Schrämen von Gestein zu schaffen, bei welchem dem Meißel zusätzlich zu der Drehbewegung des Schrämkopfes eine schlagende Bewegung erteilt wird, um die Lösearbeit zu erleichtern. Zur Erzielung eines derartigen schlagenden Schrämens geht das erfindungsgemäße Verfahren von der Verwendung eines Schrämkopfes mit über einen begrenzten Hub axial verschiebbaren Meißeln, welche mit einem als Ventil ausgebildetem Zylinder-Kolbenaggregat zusammenwirken, aus und besteht im wesentlichen darin, daß das Zylinder-Kolbenaggregat intermittierend mit Druckmittel beaufschlagt wird und hierbei einen Druckhub des Meißels in eine äußere axiale Verschiebelage bewirkt und in den Phasen ohne Beaufschlagung mit Druckmittel durch den Meißel in seine Ausgangsstellung gedrückt wird.

Dadurch, daß das als Ventil ausgebildete Zylinder-Kolbenaggregat intermittierend mit Druckmittel beaufschlagt wird, kann der Meißel intermittierend nach seinem Eintritt in das zu lösende Gestein gegen die Ortsbrust geschlagen werden. Sobald die Druckbeaufschlagung des Zylinder-Kolbenaggregates unterbrochen wird, kann der Meißel durch den Schnittdruck in seine eingeschobene Stellung über den vorgegebenen Axialhub verschoben werden, worauf er neuerlich bei Aufschalten des Druckmittels gegen die Ortsbrust geschlagen werden kann.

Vorzugsweise wird das erfindungsgemäße Verfahren so ausgeführt, daß das als Ventil ausgebildete Zylinder-Kolbenaggregat durch Druckflüssigkeit im Schließsinne beaufschlagt wird, wobei der Ventilstössel entgegen der axialen Komponente der Schnittkraft in die Schließstellung des Ventils bewegt wird. Bei einer derartigen Ausbildung muß der im Schließsinne wirksame Querschnitt des Ventils hinreichend groß bemessen sein, um ein Schließen des Ventils und damit eine Bewegung des Meißels gegen die Ortsbrust bei Beaufschlagen mit Druckflüssigkeit entgegen der Schnittkraft sicherzustellen. Zum Öffnen eines derartigen Ventils bei abgeschalteter Druckmittelquelle wird vorzugsweise das beim Öffnungshub des Ventiles verdrängte Flüssigkeitsvolumen über wenigstens eine Düse in Richtung zum Meißel bzw. der Ortsbrust ausgepreßt. Um eine schlagartige Bewegung des Meißels in die relativ zur Achse des Schrämkopfes äußere Stellung zu erzielen, wird vorzugsweise die Druckflüssigkeit unter einem Druck von größer als 200 bar, insbesondere zwischen 300 und 750 bar, zugeführt.

Die erfindungsgemäße Vorrichtung zur Durchführung dieses Verfahrens geht von einer Teilschnittschrämmaschine aus, deren Schrämarm wenigstens einen Schrämkopf aufweist, welcher mit in ihrer Achsrichtung über einen begrenzten Hub axial verschieblich in Meißelhaltern gelagerten Meißeln bestückt ist, die mit einem als druckmittelbeaufschlagtes Ventil ausgebildeten Zylinder-Kolbenaggregat zusammenwirken. Derartige bekannte Einrichtungen wurden bislang so eingesetzt, daß der Meißel, sobald er in das Gestein eintaucht, ein Ventil in die Offen-Stellung steuert und damit eine Wasserzuführung zu einer Düse freigibt (EP-A-60827). Erfindungsgemäß ist die Ausbildung nun so getroffen, daß die Meißelschäfte jeweils mit dem in bekannter Weise hydraulisch oder pneumatisch betriebenen Zylinder-Kolbenaggregat, dessen Arbeitsraum mit einer intermittierend zu-und-ab-schaltbaren Druckmittelquelle verbunden ist, kraftschlüssig zum Übertragen einer die Meißel entgegen der Schnittkraft nach außen verschiebenden Druckkraft zusammenwirken. Der Betriebsdruck der Druckmittelquelle sowie der wirksame Kolbenquerschnitt des Zylinder-Kolbenaggregates müssen somit so dimensioniert sein, daß der Meißel unter Überwindung der axialen Komponente der Schnittkraft auch dann noch in eine äußere Lage gedrückt werden kann, wenn er im Eingriff mit dem abzubauenden bzw. zu lösenden Gestein steht.

In vorteilhafter Weise ist die Ausbildung hierbei so getroffen, daß der Ventilstößel des Ventils in Schießrichtung des Ventils kraftschlüssig mit dem Meißelschaft zusammenwirkt, daß der Raum vor dem Ventilsitz mit der schaltbaren Druckmittelquelle verbunden ist und daß nach dem Ventilsitz ein diesen Raum bei geöffnetem Ventil mit einer Austrittsöffnung verbindender Kanal, insbesondere eine Spritzdüse, angeschlossen ist. Bei Beaufschlagung eines derartigen Ventils mit Druckflüssigkeit, beispielsweise Wasser, wird der Meißel schlagartig in seine Außenstellung bewegt. Sobald die Druckflüssigkeitsquelle abgeschaltet wird, genügt ein geringfügiges Lecken aus dem Raum vor dem Ventilsitz, um ein Öffnen des Ventils durch die axiale Komponente der Schnittkraft zu ermöglichen, wobei bei diesem Öffnungshub durch den Ventilstößel eine Verdrängung von Flüssigkeit aus dem Raum vor dem Ventilsitz erfolgt. Diese Flüssigkeit kann beispielsweise über eine Spritzdüse ausgepreßt werden. Zur Erleichterung der Öffnungsbewegung durch die axiale Komponente der Schnittkraft kann der Raum vor dem Ventilsitz über eine Drosselstelle mit einer Austrittsöffnung, insbesondere der Spritzdüse, verbunden sein. Eine derartige Drosselstelle erleichtert das Abheben des Ventils vom Ventilsitz durch die axiale Komponente der Schnittkraft, sobald die Druckmittelquelle abgeschaltet ist.

Um eine rasche Schließbewegung des Ventils und damit eine schlagartige Bewegung des Meißels zu erzielen, ist in vorteilhafter Weise der Ventilstößel zumindest weitgehend dichtend im Ventilgehäuse geführt, wobei die lichte Querschnittsfläche des Ventilstößels multipliziert mit dem Betriebsdruck der Druckmittelquelle und gegebenenfalls zuzüglich der Kraft einer das Ventil in die Schließrichtung drückenden Feder eine größere Kraft als die maximale in Achsrichtung des Meißels wirksame Schnittkraft ergeben muß.

Die intermittierend zuschaltbare und abschaltbare Druckmittelquelle ist vorzugsweise über einen Drehschieber intermittierend mit dem hydraulischen als Ventil ausgebildeten Zylinder-Kolbenaggregat in Verbindung. Ein derartig intermittierend wirkender Drehschieber kann in einfacher Weise so verwirklicht werden, daß die Druckmittelquelle an eine zentrale axiale Bohrung in einem relativ zum Schrämarm ortsfesten Teil angeschlossen ist und über eine Mehrzahl von in im wesentlichen radialer Richtung mündende Durchtrittsöffnungen mit Kanälen in einem rotierenden Teil des Schrämkopfes verbindbar ist, welche Kanäle in den Arbeitsraum des Zylinder-Kolbenaggregates bzw. den Raum vor dem Ventilsitz münden. Derartige Ausbildungen sind analog aufgebaut wie bekannte Sektorsteuerungen, bei welchen der Wasseraustritt lediglich über einen vorgegebenen Zentriwinkel der vollständigen Umdrehung eines Schrämkopfes möglich ist, und unterscheiden sich von einer derartigen Sektorsteuerung durch die Mehrzahl von in radialer Richtung mündenden Durchtrittsöffnungen. Mit Rücksicht auf ein Lecken des Ventils können diese radialen Durchtrittsöffnungen gleichfalls lediglich über einen vorgegebenen Zentriwinkel der Umdrehung des Schrämkopfes vorgesehen sein, jedoch ist dies nicht unbedingt Voraussetzung, da bei anstehendem Betriebsdruck der Druckmittelquelle ein Wasseraustritt in nennenswertem Ausmaß nicht erfolgen kann, da das Ventil in diesem Falle geschlossen ist.

Bei der Verwendung von Preßluft kann die intermittierende Zufuhr des Druckmittels durch den die Meißel beaufschlagenden Kolben unmittelbar gesteuert werden. Zu diesem Zweck ist eine derartige Vorrichtung vorzugsweise so ausgebildet, daß das pneumatische als Ventil ausgebildete Zylinder-Kolbenaggregat einen in einem Zylinder geführten Kolben mit gegenüber dem mit dem Meißel kraftschlüssig zusammenwirkenden Teil vergrößertem Durchmesser aufweist, dessen Mantel bei seinem Hub eine Zuführungsbohrung für Druckluft und eine an seinem Arbeitsraum angeschlossene Entlastungsbohrung überschleift, wobei bei überschliffener Entlastungsbohrung ein Überströmkanal zwischen dem Arbeitsraum des Kolbens und dem meißelseitigen Ringraum, an welchen die Bohrung für Druckluft angeschlossen ist, freigegeben ist. Bei einer derartigen Ausbildung wird nach dem Eintreten des Meißels in das Gestein zunächst der Kolben um dasjenige Ausmaß verschoben, daß die Zuführungsbohrung für die Druckluft freigegeben wird. In der Folge beaufschlagt die Druckluft den Kolben in Richtung eines Hubes vom Meißel weg, wobei aus dem Arbeitsraum des Kolbens für den Schlag auf den Meißel so lang Luft entweichen kann, als die Entlastungsbohrung noch nicht überschliffen ist. Eine Umsteuerung für den Schlaghub des Kolbens wird durch den Überströmkanal zwischen dem Arbeitsraum des Kolbens und dem meißelseitigen Ringraum, an welchem die Bohrung für Druckluft angeschlossen ist, gewährleistet. Um sicherzustellen, daß die Druckluftzufuhr so lang gesperrt ist, als der Meißel nicht im Eingriff mit dem Gestein ist, wird die Ausbildung in vorteilhafter Weise so getroffen, daß der Kolben durch eine Feder in Anlage an einen Meißel gehalten ist, wobei die Kraft der Feder geringer als die Reaktionskomponente der Schnittkraft und größer als die dem Gewicht von Meißel und Kolben entsprechende Kraft ist.

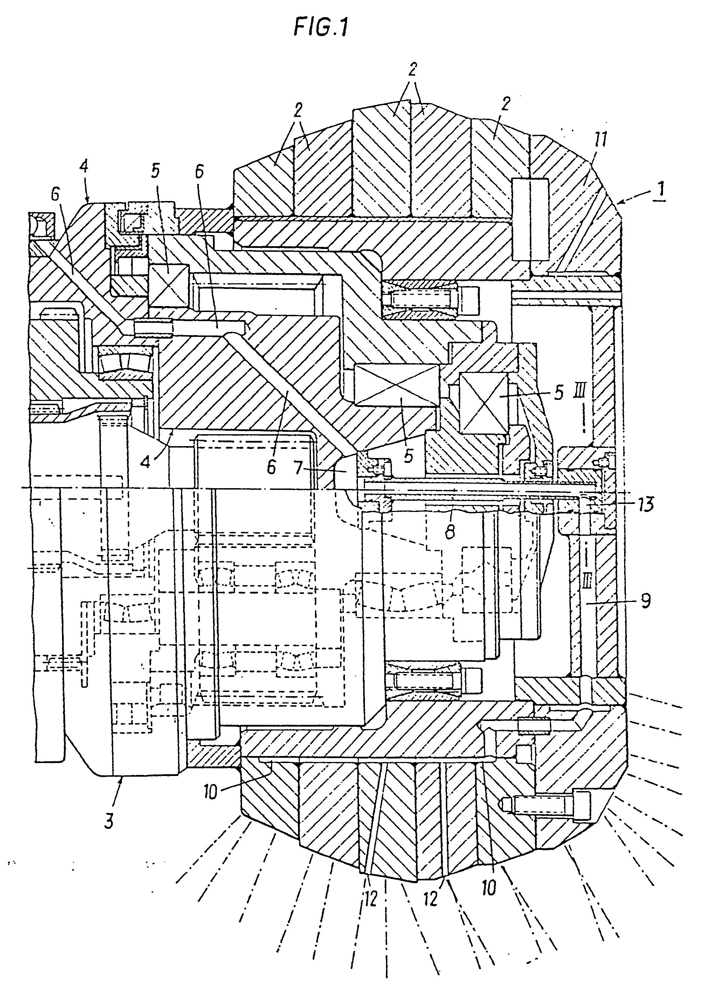

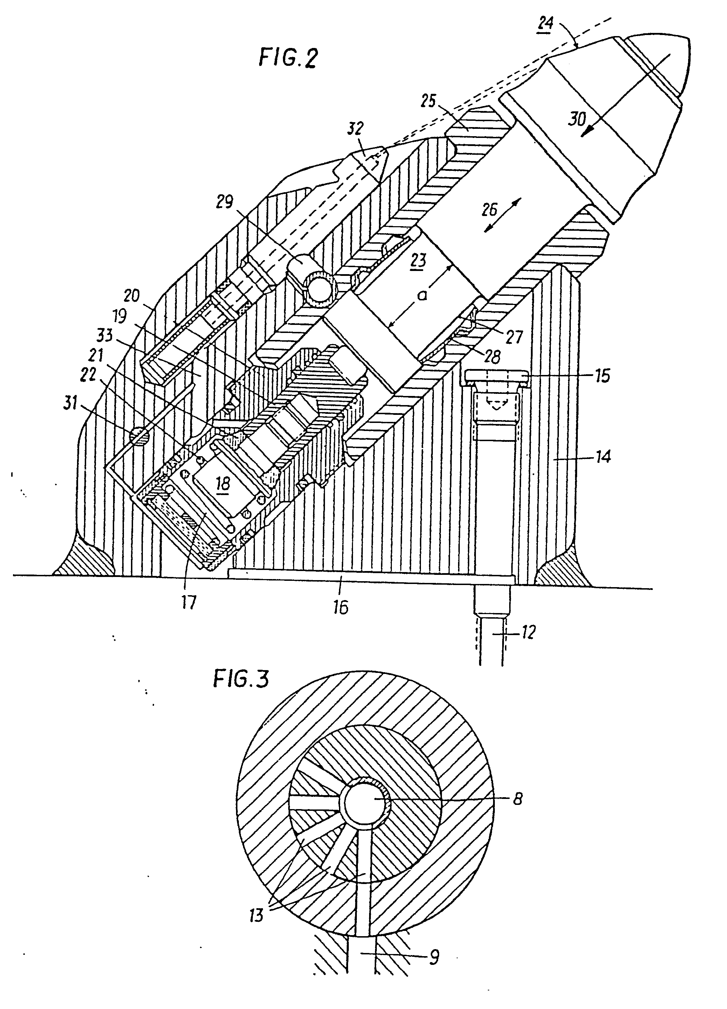

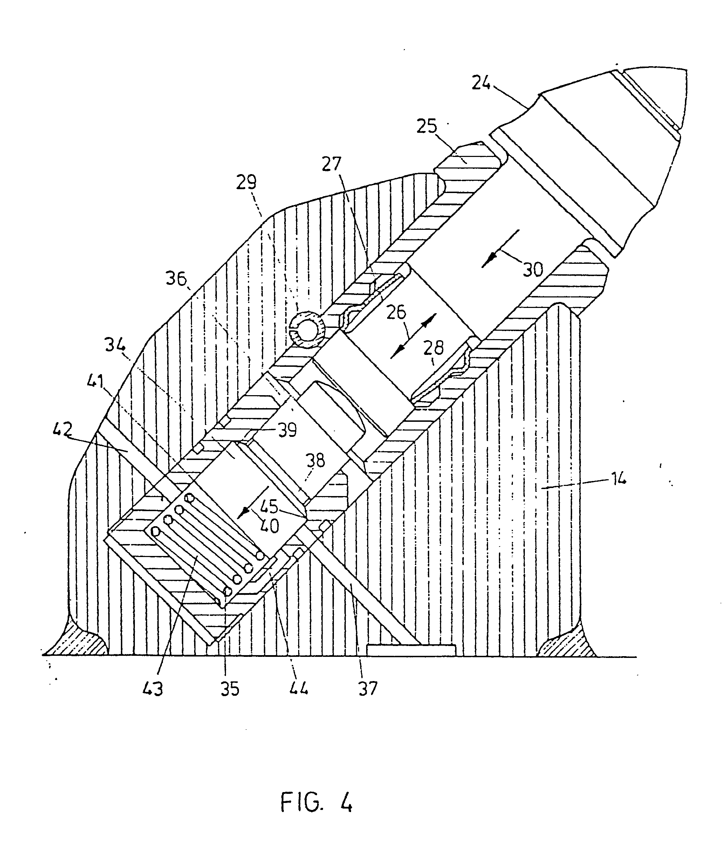

Die Erfindung wird nachfolgend an Hand eines in der Zeichnung dargestellten Ausführungsbeispiels näher erläutert. In dieser zeigen Fig.1 einen Querschnitt durch einen Schrämkopf, an welchem Meißelhalter und Meißel festlegbar sind, Fig.2 einen Querschnitt durch einen Meißelhalter mit einem als Ventil ausgebildeten hydraulischen Zylinder-Kolbenaggregat, Fig.3 einen Schnitt nach der Linie III-III der Fig.1 in vergrößerter Darstellung, aus welchem die intermittierende Schaltung der Druckmittelquelle ersichtlich ist, und Fig.4 einen Schnitt analog der Fig.2 durch eine preßluftbetriebene Ausbildung.

In Fig.1 ist der Schrämkopf 1 aus miteinander verschweißten Scheiben 2 aufgebaut und drehbar an einem nicht dargestellten Schrämarm gelagert. Die letzte Stufe des Untersetzungsgetriebes ist strichliert mit 3 angedeutet. Die Lagerung des Schrämkopfes 1 an einem mit dem Schrämarm verbundenen Träger 4 erfolgt über Wälzlager 5.

Die Wasserzufuhr erfolgt zunächst über Kanäle 6 im Träger 4 und mündet in einen Verteilerraum 7, über welchen sie über eine axiale Zuführungsleitung 8, welche entsprechend abgedichtet ist, und radiale Leitungen 9 in die sich in Achsrichtung des Schrämkopfes erstreckenden Verteilerhohlräume 10 geführt ist. Die Stirnscheibe 11 des Schrämkopfes 1 ist hierbei durch Schrauben mit dem Grundkörper des Schrämkopfes Verbunden. Aus den Verteilerhohlräumen 10 gelangt das Wasser über im wesentlichen radiale Bohrungen 12 zu den Austrittsdüsen, welche im Meißelhalter untergebracht sein können.

Die axiale Zuführungsleitung 8 weist hiebei an ihrem stirnseitigen Ende eine Anzahl von radialen Durchbrechungen 13 auf, welche von den radialen Leitungen 9 bei der Umdrehung des Schrämkopfes 1 überschliffen werden. Dies ist in vergrößerter Darstellung der Fig. 3 zu entnehmen.

In Fig. 2 ist ein Meißelhalter 14 dargestellt. In den Fuß des Meißelhalters 14 mündet die Druckwasserzuführungsleitung 12 des Schrämkopfes. Im Falle eines Bruches des Meißelhalters 14 kann diese Mündung mit einem Stopfen 15 abgeschlossen werden, um einen übermäßigen Wasserverbrauch zu verhindern. Das Wasser gelangt aus der Leitung 12 über einen im Fuß des Meißelhalters 14 angeordneten Kanal 16 in den Arbeitsraum 17 eines hydraulischen Zylinder-Kolbenaggregates, welches als Ventil 18 ausgebildet ist. Das Ventil 18 weist einen als Kolben ausgebildeten Ventilstößel 19 auf, welcher dichtend im Ventilgehäuse 20 geführt ist. Das Ventilgehäuse 20 weist weiters den Ventilsitz 21 auf, an welchem der Ventilkörper in der in Fig. 2 dargestellten geschlossenen Lage anliegt. Der Ventilkörper ebenso wie der Ventilstößel 19 wird durch das in den Arbeitsraum 17 gelangende Druckmittel in seine Schließlage gedrückt, wobei im gleichen Schließsinn eine Feder 22 zur Wirkung gelangt. Der Ventilstößel 19 wirkt mit dem Meißelschaft 23 eines Meißels 24 zusammen. Der Meißel 24 ist in einer Büchse 25 axial in Richtung des Doppelpfeiles 26 verschieblich, wobei die Verschiebebewegung durch die Breite a der axialen Nut 27 im Meißelschaft begrenzt ist. In der Büchse ist zur Begrenzung des Hubes des Meißels 24 im Sinne des Doppelpfeiles 26 ein Federring 28 angeordnet, welcher gleichzeitig den Meißel 24 gegen Hinausfallen sichert. Die Büchse 25 ist durch einen federnden Stift 29 im Meißelhalter 14 gesichert.

In der geschlossenen Stellung des Ventils 18 befindet sich der Meißel 24 in seiner nach außen gedrückten Stellung. Solange im Arbeitsraum 17, d.h. im Raum vor dem Ventilsitz, Druckmittel ansteht, kann das Ventil auch bei Eintreten des Meißels 24 in das Gestein nicht durch die Schnittkraft geöffnet werden. Die axiale Komponente der Schnittkraft ist durch den Pfeil 30 angedeutet. Sobald der Druck im Raum 17 abfällt, d.h. sobald die Druckmittelquelle abgeschaltet ist, kann Flüssigkeit aus dem Raum 17 über die Drossel 31 zu der Düse 32 abfließen und das Ventil vom Ventilsitz abgehoben werden. Die axiale Komponente der Schnittkraft vermag das Ventil in die Offen-Stellung zu drüken, wobei das aus dem Raum 17 verdrängte Volumen durch den Ventilsitz hindurch über den Kanal 33 zur Düse 32 gepreßt wird. Das Ventil bleibt nun so lang in der Offen-Stellung und der Meißel 24 so lang in seiner eingeschobenen Stellung, als die Druckmittelquelle abgeschaltet bleibt. Sobald die Druckmittelquelle wiederum eingeschaltet wird, wird das Ventil entgegen der auf den Meißel wirkenden axialen Komponente der Schnittkraft wieder in die Schließstellung gedrückt, wobei kurzfristig noch Wasser über den Ventilsitz und die Kanäle 33 zur Düse 32 abfließen kann. Sobald das Ventil 18 wieder geschlossen ist, erfolgt so lang kein nennenswertes weiteres Aussprühen von Flüssigkeit, als der Druck im Raum 17 aufrecht erhalten wird. In dieser Phase erfolgt lediglich ein geringfügiges Lecken über die Drossel 31. Bei neuerlichem Druckloswerden des Raumes 17 wird wiederum Flüssigkeit aus dem Raum 17 über die Kanäle 33 zur Düse gepreßt, wobei das Ventil wiederum in die Offen-Stellung gelangt. Durch intermittierende Wiederholung dieses Vorganges läßt sich ein schlagartiges Bewegen des Meißels 24 entgegen der Richtung 30 der axialen Komponente der Schnittkraft erzielen.

Die intermittierende Beaufschlagung des Raumes 17 durch Druckmittel wird durch die vergrößerte Darstellung nach Fig. 3 illustriert. Bei der Drehbewegung des Schrämkopfes um die feststehende axiale Zuführungsleitung 8 wird nach Art eines Drehschiebers abwechselnd durch die radialen Durchbrechungen 13 die Verbindung der Druckmittelquelle mit den Bohrungen 9 und damit dem Raum 17 vor dem Ventilsitz des Ventils hergestellt oder abgeschlossen. Bei der Darstellung nach Fig. 3 ist die Ausbildung so gezeigt, daß die radialen Durchbrechungen 13 nur in einem Zentriwinkel von etwa 120° der Umdrehung des Schrämkopfes vorgesehen sind und somit lediglich über den Bereich eine Beaufschlagung des Raumes 17 vor dem Ventilsitz erfolgt, in welchem ein schlagendes Schrämen aufgrund des Eingriffes des Meißels 24 in das Gestein in Frage kommt.

In Fig. 4 ist eine preßluftbetriebene Ausbildung ersichtlich. Der Meißel ist wiederum mit 24 bezeichnet und in einer Büchse 25 axial in Richtung des Doppelpfeiles 26 verschieblich. Die Verschiebebewegung ist wiederum durch die Breite der Axialnut 27 im Meißelschaft begrenzt, wobei in der Büchse zur Begrenzung des Hubes des Meißels 24 ein Federring 28 angeordnet ist, welcher gleichzeitig den Meißel 24 gegen Herausfallen sichert. Die Büchse 25 ist wiederum durch einen federnden Stift 29 im Meißelhalter 14 gesichert. In Achsrichtung anschließend ist ein Kolben 34 angeordnet, welcher durch eine Feder 35 in Anlage an den Meißelschaft gedrückt ist. Der Kolben 34 weist einen kraftschlüssig mit dem Meißel 24 zusammenwirkenden verjüngten Abschnitt 36 auf und überschleift bei der in Fig. 4 gewählten Darstellung die Zuführungsbohrung 37 für die Druckluft. Durch die Reaktionskraftkomponente im Sinne des Pfeiles 30 wird nach dem Eintreten des Meißels 24 in das Gestein der Kolben 34 so weit verschoben, daß die Zuführungsbohrung 37 für die Druckluft freigegeben ist. Die Druckluft tritt nun über die Bohrung 37 in den Ringraum 38 ein und wirkt auf die Ringfläche 39 des Kolbens 34 im Sinne des Pfeiles 40. Die untere Kolbenkante 41 des Kolbens 34 überschleift in der Folge die Entlastungsbohrung 42, wodurch sich im Arbeitsraum 43 des Kolbens 34 ein Druck aufbauen kann. Nach dem Überschleifen der Überströmbohrung 44 durch die Oberkante 45 des Kolbens 34 gelangt Preßluft aus der Zuführungsbohrung 37 in den Arbeitsraum 43. Aufgrund der wesentlich größeren im Schließsinne beaufschlagten Querschnittsfläche des Kolbens 34 im Vergleich zur Ringfläche 38, welche im Öffnungssinne wirkt, wird der Kolben 34 rasch nach vor bewegt und übt bei dieser Bewegung einen Stoß auf den Meißel 24 aus. Sobald hiebei die Unterkante 41 des Kolbens 34 die Entlastungsbohrung 42 wiederum freigibt, wird Druck abgebaut und der Luftdruck aus der Preßluftzuführungsbohrung 37 ist wiederum in der Lage, den Kolben 34 in Richtung des Pfeiles 40 zu verschieben.

Wenn sich der Meißel aus dem Schrämbereich entfernt, wird der Meißel durch die Kraft der Feder 35 in seiner vorderen Stellung gehalten, bei welcher der Kolben 34 die Druckluftzuführungsbohrung 37 verschließt, so daß keine Druckluft in den Ringraum 38 eindringen kann.

**Patentansprüche**

1. Verfahren zum Schrämen von Gestein mit einem Schrämkopf (1), dessen Meißel (24) über einen begrenzten Hub (a) axial verschiebbar mit einem als druckmittelbeaufschlagtes Ventil (18) ausgebildeten Zylinder-Kolbenaggregat zusammenwirken, dadurch gekennzeichnet, daß das Zylinder-Kolbenaggregat (18) intermittierend mit Druckmittel beaufschlagt wird und hierbei einen Druckhub des Meißels (24) in eine äußere axiale Verschiebelage bewirkt und in den Phasen ohne Beaufschlagung mit Druckmittel durch den Meißel (24) in seine Ausgangsstellung gedrückt wird.

2. Verfahren nach Anspruch 1, dadurch gekennzeichnet, daß das als Ventil ausgebildete Zylinder-Kolbenaggregat (18) durch Druckflüssigkeit im Schließsinne beaufschlagt wird, wobei der Ventilstößel (19) entgegen der axialen Komponente (30) der Schnittkraft in die Schließstellung des Ventils (18) bewegt wird.

3. Verfahren nach Anspruch 1 oder 2, dadurch gekennzeichnet, daß das beim Öffnungshub des Ventiles (18) verdrängte Flüssigkeitsvolumen über wenigstens eine Düse (32) in Richtung zum Meißel (24) bzw. der Ortsbrust ausgepreßt wird.

4. Verfahren nach Anspruch 3, dadurch gekennzeichnet, daß die Druckflüssigkeit unter einem Druck von größer als 200 bar, insbesondere 300 - 750 bar, zugeführt wird.

5. Vorrichtung zur Durchführung des Verfahrens nach einem der Ansprüche 1 bis 4 mit einer Teilschnittschrämmaschine, deren Schrämarm wenigstens einen Schrämkopf (1) aufweist, welcher mit in ihrer Achsrichtung über einen begrenzten Hub (a) axial verschieblich in Meißelhaltern (14) gelagerten Meißeln (24) bestückt ist, die mit einem als druckmittelbeaufschlagtes Ventil (18) ausgebildeten Zylinder-Kolbenaggregat zusammenwirken, dadurch gekennzeichnet, daß die Meißelschäfte (23) jeweils mit dem in bekannter Weise hydraulisch oder pneumatisch betriebenen Zylinder-Kolbenaggregat (18), dessen Arbeitsraum (17, 43) mit einer intermittierend zu- und abschaltbaren Druckmittelquelle verbunden ist, kraftschlüssig zum Übertragen einer Druckkraft zusammenwirken.

6. Vorrichtung nach Anspruch 5, dadurch gekennzeichnet, daß der Ventilstößel (19) des Ventils (18) in Schließrichtung des Ventils kraftschlüssig mit dem Meißelschaft (23) zusammenwirkt, daß der Raum (17) vor dem Ventilsitz mit der schaltbaren Druckmittelquelle verbunden ist und daß nach dem Ventilsitz ein diesen Raum bei geöffnetem Ventil mit einer Austrittsöffnung verbindender Kanal (33), insbesondere eine Spritzdüse (32), angeschlossen ist.

7. Vorrichtung nach Anspruch 6, dadurch gekennzeichnet, daß der Ventilstößel (19) zumindest weitgehend dichtend im Ventilgehäuse (20) geführt ist und die lichte Querschnittsfläche desselben multipliziert mit dem Betriebsdruck der Druckmittelquelle und gegebenenfalls zuzüglich der Kraft einer das Ventil (18) in die Schließrichtung drückenden Feder (22) eine größere Kraft als die maximale in Achsrichtung des Meißels wirksame Schnittkraft ergibt.

8. Vorrichtung nach Anspruch 6 oder 7, dadurch gekennzeichnet, daß der Raum (17) vor dem Ventilsitz über eine Drosselstelle (31) mit einer Austrittsöffnung, insbesondere der Spritzdüse (32), verbunden ist.

9. Vorrichtung nach einem der Ansprüche 5 bis 8, dadurch gekennzeichnet, daß die Druckmittelquelle über einen Drehschieber intermittierend mit dem hydraulischen als Ventil ausgebildeten Zylinder-Kolbenaggregat (18) in Verbindung steht.

10. Vorrichtung nach einem der Ansprüche 5 bis 8, dadurch gekennzeichnet, daß die Druckmittelquelle an eine zentrale axiale Bohrung (8) in einem relativ zum Schrämarm ortsfesten Teil angeschlossen ist und über eine Mehrzahl von in im wesentlichen radialer Richtung mündende Durchtrittsöffnungen (13) mit Kanälen (9) in einem rotierenden Teil des Schrämkopfes (1) verbindbar ist.

11. Vorrichtung nach Anspruch 5, dadurch gekennzeichnet, daß das pneumatische als Ventil ausgebildete Zylinder-Kolbenaggregat einen in einem Zylinder geführten Kolben (34) mit gegenüber dem mit dem Meißel (24) kraftschlüssig zusammenwirkenden Teil (36) vergrößertem Durchmesser aufweist, dessen Mantel bei seinem Hub eine Zuführungsbohrung (37) für Druckluft und eine an seinen Arbeitsraum (43) angeschlossene Entlastungsbohrung überschleift, wobei bei überschliffener Entlastungsbohrung (42) ein Überströmkanal (44) zwischen dem Arbeitsraum (43) des Kolbens (34) und dem meißelseitigen Ringraum (38), an welchem die Bohrung (37) zur Druckluft angeschlossen ist, freigegeben ist.

12. Vorrichtung nach Anspruch 11, dadurch gekennzeichnet, daß der Kolben (34) durch eine Feder (35) in Anlage an den Meißel (24) gehalten ist, wobei die Kraft der Feder (35) geringer als die Reaktionskomponente (30) der Schnittkraft und größer als die dem Gewicht von Meißel (24) und Kolben (34) entsprechende Kraft ist.


## Claims

1. Process for cutting rock by means of a cutting head (1) having its bits (24) cooperating over a limited axial shifting stroke (a) with a cylinder-piston-unit designed as a pressurised-fluid-actuated valve (18), characterised in that the cylinder-piston-unit (18) is intermittently subjected to the action of pressurised fluid and is thereby effecting a pressure stroke of the bit (24) into an outer axially shifted position and is pushed into its starting position by the bit (24) during the phases lacking any action of pressurised fluid.

2. Process as claimed in claim 1, characterised in that the cylinder-piston-unit (18) being designed as a valve is acted upon by the pressurised fluid in the closing sense, the valve shaft (19) being moved into the closed position of the valve (18) against the action of the axial component (30) of the cutting force.

3. Process as claimed in claim 1 or 2, characterised in that the volume of liquid displaced during the opening stroke of the valve (18) is expelled in direction to the bit (24) or the mine face, resp., via at least one nozzle (32).

4. Process as claimed in claim 3, characterised in that the pressurised liquid is supplied under a pressure of more than 200 bar, in particular a pressure between 300 and 750 bar.

5. Apparatus for carrying out the process as claimed in any one of claims 1 to 4, comprising a partial cut cutting machine having its cutting arm provided with at least one cutting head (1) being equipped with bits (24) supported within bit holders (14) for axial shifting movement over a limited stroke (a), said bits (24) cooperating with a cylinder-piston-unit designed as a pressurised-fluid-actuated valve (18), characterised in that the bit shafts (23) each cooperate with the cylinder-piston-unit (18) operated hydraulically or pneumatically as known per se, the working space (17, 43) of which is connected with a source of pressurised fluid being switchable on and off intermittently, transmitting a pressure force in a non-positive or force-coupled manner.

6. Apparatus as claimed in claim 5, characterised in that the valve shaft (19) of the valve (18) cooperates with the bit shaft (23) in closing direction of the valve in a non-positive or force-coupled manner, that the space (17) in front of the valve seat is connected with the switchable source of pressurised fluid and that behind the valve seat a channel (33), in particular an ejection nozzle (32), is coupled for connecting said space with an exit port when the valve is opened.

7. Apparatus as claimed in claim 6, characterised in that the valve shaft (19) is guided within the valve housing (20) in an at least substantially sealing manner, and that the free cross section of the valve shaft multiplied by the operating pressure of the source of pressurised fluid and the added force of an optionally provided spring (22) for urging the valve (18) in closing direction results in a greater force than is the maximum cutting force acting in axial direction of the bit.

8. Apparatus as claimed in claim 6 or 7, characterised in that the space (17) in front of the valve seat is connected with an exit port, in particular the ejection nozzle (32), via a throttle area (31).

9. Apparatus as claimed in any one of claims 5 to 8, characterised in that the source of pressurised fluid is in intermittent connection with the hydraulic cylinder-piston-unit (18), designed as a valve, via a rotary slide valve.

10. Apparatus as claimed in any one of claims 5 to 8, characterised in that the source of pressurised fluid is connected to a central axial bore (8) provided in a part being stationary relative to the cutting arm and is connectable with channels (9) provided within a rotating part of the cutting head (1) via a plurality of through-passages (13) opening in an essentially radial direction.

11. Apparatus as claimed in claim 5, characterised in that the pneumatic cylinder-piston-unit, designed as a valve, has a piston (34) guided within a cylinder and having a greater diameter than has the part (36) cooperating in a force-coupled or non-positive manner with the bit (24), the mantle of said piston sliding during its stroke over a supply bore (37) for pressurised air and over a relief bore connected to the working space (43) of this piston, whereat an overflow channel (44) between the working space (43) of the piston (34) and the annular space (38) located at the side of the bit, to which space the bore (37) for pressurised air is connected, is unblocked while the relief bore (42) is closed.

12. Apparatus as claimed in claim 11, characterised in that the piston (34) is urged in contact with the bit (24) by means of a spring (35), the force of the spring (35) being less than the reaction component (30) of the cutting force and greater than the force corresponding to the weight of bit (24) and piston (34).


## Revendications

1 - Procédé de creusement de roches avec une tête de creusement (1) dont les pics (24) agissent en combinaison avec un ensemble cylindre-piston réalisé sous la forme d'une soupape (18) chargée par un fluide sous pression, pour pouvoir se déplacer axialement avec une course limitée (a), caractérisé en ce que l'ensemble cylindre-piston reçoit par intermittence un fluide sous pression, produisant un déplacement du pic (24) sous l'effet de la pression, le conduisant dans une position axiale extérieure et que, lors des phases où le fluide sous pression n'est pas envoyé, le pic (24) repousse cet ensemble cylindre-piston dans sa position de départ.

2 - Procédé selon la revendication 1, caractérisé en ce que l'ensemble cylindre-piston (18) réalisé sous la forme d'une soupape est chargé par du fluide sous pression dans le sens de la fermeture, le poussoir (19) de soupape étant placé, en surmontant la composante axiale (30) de la force de coupe. dans la position de fermeture de la soupape (18).

3. Procédé selon la revendication 1 ou 2, caractérisé en ce que le volume de fluide chassé lors de la course d'ouverture de la soupape (16) est expulsé vers le pic (24) ou le front de taille en passant par au moins une buse (32).

4 - Procédé selon la revendication 3, caractérisé en ce que le fluide sous pression est acheminé sous une pression supérieure à 200 bars, en particulier 300 a 750 bars.

5 - Dispositif pour la mise en oeuvre du procédé selon l'une des revendications 1 à 4, avec une machine de creusement à découpe partielle dont le bras de creusement présente au moins une tête (1) de creusement pourvue de pics (24) montés dans des porte pics (14) qui peuvent se déplacer axialement avec une course limitée (a) et qui agissent en combinaison avec un ensemble cylindre-piston réalisé sous la forme d'une soupape (18) chargée par un fluide sous pression, caractérisé en ce que les tiges (23) des pics (24) agissent chacune en combinaison pour transmettre une force de pression avec l'ensemble hydraulique ou pneumatique cylindrepiston (18) dont la chambre active (17, 43) est reliée à une source de fluide sous pression pouvant être mise en circuit et hors circuit par intermittence.

6 - Dispositif selon l'une des revendications 1 à 5, caractérisé en ce que le poussoir (19) de la soupape (18), en position fermée de la soupape agit en combinaison avec la tige (23) du pic (24), en ce que la chambre (17) précédant le siège de soupape est reliée à la source de fluide sous pression pouvant être mise en circuit et hors circuit et en ce que, après le siège de soupape est branché un canal (33), en particulier une buse de projection (32), reliant cette chambre (17), quand la soupape est ouverte, à une ouverture de sortie.

7 - Dispositif selon la revendication 6, caractérisé en ce que le poussoir (19) de soupape passe dans le boîtier (20) de la soupape (18) d'une façon étanche au moins dans une large mesure, et en ce que la section de passage de ce boîtier (20) multipliée par la pression de service de la source de fluide sous pression, en y ajoutant le cas échéant la force d'un ressort (22) agissant sur la soupape (18) dans le sens de la fermeture, donne une force supérieure à la force de coupe maximale agissant dans la direction axiale du pic (24).

8 - Dispositif selon la revendication 6 ou 7, caractérisé en ce que la chambre (17) précédant le siège de soupape est reliée, par l'intermédiaire d'un étranglement (31) à une ouverture de sortie, en particulier la buse de projection (32).

9 - Dispositif selon l'une des revendications 5 à 6, caractérisé en ce que la source de fluide sous pression est reliée de façon intermittente, par l'intermédiaire d'un tiroir rotatif, à l'ensemble hydraulique cylindre-piston (18) réalise sous la forme d'une soupape.

10 - Dispositif selon l'une des revendications 5 à 8, caractérisé en ce que la source de fluide sous pression est reliée à un perçage axial central (8) dans une pièce fixe par rapport au bras de creusement et qu'elle peut être reliée par l'intermédiaire de plusieurs ouvertures de passage (13) débouchant pratiquement en direction radiale, à des canaux (9) se trouvant dans une partie rotative de la tête de creusement (1).

11 - Dispositif selon la revendication 5, caractérisé en ce que l'ensemble fluidique cylindre-piston réalisé sous la forme d'une soupape possède un piston (34) logé dans un cylindre, dont le diamètre est supérieur à celui de la pièce (36) qui agit, en combinaison avec le pic (24) et dont la paroi, lors de sa course se meut devant un trou (37) d'arrivée de l'air comprimé et un trou de décharge relié à sa chambre active (43) par un canal d'équilibrage (44) situé entre la chambre active (43) du piston (34) et l'espace annulaire (38) situé du côté du pic (24), l'espace annulaire (38) auquel est relié le perçage (37) communiquant avec le générateur de fluide comprimé, étant démasqué quand le perçage de décharge (42) est occulté.

12 - Dispositif selon la revendication 11, caractérisé en ce qu'un ressort (35) maintient le piston (34) en contact avec le pic (24), la force du ressort (35) étant inférieure à la composante (30) de réaction de la force de coupe et supérieure à la force correspondant au poids du pic (24) et du piston (34).

## FIG.1

FIG.2

FIG.3

FIG. 4